# EUROPEAN PATENT APPLICATION

(11) **EP 2 359 695 A1**
(43) Date of publication of application: **24.08.2011**
(21) Application number: 11151373.5
(22) Date of filing: 19.01.2011
(51) Int. Cl.: A23B 7/10, A23B 7/157, A61L 2/16, A61L 2/18, A23L 1/015, A23L 1/216

(54) **Method for producing products with a reduced PPO activity from potatoes**

(30) Priority: 21.01.2010 DK 201070018
(71) Applicant: KMC Kartoffelmelcentralen Amba, 7330 Brande (DK)
(72) Inventor: Poulsen, Poul Emil, 8800 Viborg (DK)
(74) Representative: Plougmann & Vingtoft A/S

(57) **Abstract**

The present invention relates to a method for producing products with a reduced PPO activity from potatoes. In particular the present invention relates to a method comprising the steps of providing one or more potatoes; rinsing the potatoes; disrupting the potatoes; adding at least one chelating agent and at least one inorganic acid; and isolating the products with a reduced PPO activity from the disrupted potatoes. Moreover the invention relates to products obtainable therefrom.

## Description

### Field of the invention

The present invention relates to the production of products with a reduced PPO activity from potatoes.

### Background of the invention

Browning of potatoes during processing leads to a reduction of the quality of the potato and the products derived thereof and in some instances a yield loss.

In the potato processing industry bi-products such as proteins and insoluble fibres are often isolated - however, in order to isolate such products from potatoes, the potato has to be disrupted. Such disruption triggers browning of the potato juice and pulb thus, leading to a reduced quality of the isolated proteins and insoluble fibres. Browning of the potato during processing is caused by (i) enzymatic browning and (ii) non-enzymatic browning.

Enzymatic browning is caused by the oxidation of natural phenolic compounds such as plant polyphenol oxidases (PPOs) present in especially the potato juice. Chemically, the phenolic compounds are oxidised into quinones, which rapidly combine into a dark polymer residues thus, leading to browning of the potato juice.

Non-enzymatic browning on the other hand is a chemical process that produces a brown colour in potatoes and other fruits and vegetables without the activity of enzymes.

Enzymatic browning has traditionally been inhibited using e.g. sulphite or heat or a combination thereof. Enzymatic browning has also been prevented by treating the disrupted potatoes with citric acid or citrate which are chelating agents. Citric acid and citrate however, are very expensive because large amounts are normally used to provide sufficient inhibition of the PPO activity.

Thus, there is a need in the art for an inexpensive yet commercially profitable process for producing products with reduced PPO activity.

### Summary of the invention

Thus, an object of the present invention is to provide an inexpensive method to produce products with a reduced PPO activity from potatoes.

In particular, it is an object of the present invention to provide a method that solves the above mentioned problems of the prior art by partly replacing the expensive chelating agent with an inexpensive inorganic acid.

Thus, one aspect of the invention relates to a method for isolating products with a reduced PPO activity from potatoes, the method comprises the steps of:
(i) providing one or more potatoes;
(ii) rinsing the potatoes;
(iii) disrupting the potatoes;
(iv) adding at least one chelating agent and at least one inorganic acid; and
(v) isolating the products with a reduced PPO activity from the disrupted potatoes.

Another aspect of the present invention relates to a protein product obtainable by the method, wherein said product comprises at least one chelating agent and at least one inorganic acid.

Yet another aspect of the present invention is to provide a fibrous product obtainable by the method, wherein said product comprises at least one chelating agent and at least one inorganic acid.

### Detailed description of the invention

The inventors of the present invention found that citric acid had a double function when inhibiting the PPO activity in plant materials, such as potatoes. One function was to lower the pH as the PPO activity has the optimum activity around pH 6.5. Secondly citric acid also showed to act as a chelating agent capable of binding the metal ion present in the PPO enzyme. As citric acid is a weak organic acid, relatively large amounts of citric acid is used to provide sufficient reduction in pH and at the same time a proper chelating effect.

The inventors of the present invention surprisingly discovered that expensive chelating agents may be partly replaced by inexpensive inorganic acids in order to provide a sufficient reduction in pH and at the same time a proper chelating effect. Thus, a profitable and commercially applicable method may be provided for producing products such as proteins and protein fibers from potatoes with a reduced PPO activity.

One aspect of the present invention pertains to a method for producing products with a reduced PPO activity from potatoes; the method comprises the steps of:
(i) providing one or more potatoes;
(ii) rinsing the potatoes;
(iii) disrupting the potatoes;
(iv) adding at least one chelating agent and at least one inorganic acid;
(v) isolating the products with a reduced PPO activity from the disrupted potatoes.

Conventionally, the PPO activity is reduced by e.g. sulphite treatment, heat treatment, acid treatment and combinations thereof or by addition of citric acid. However, the inventors of the present invention surprisingly found that by substituting part of the citric acid with an inorganic acid very effective reduction of the PPO activity could be obtained in a cheap manner.

In the present context the term "a product with a reduced PPO activity" is to be understood as a product having a PPO activity 10%, such as 20%, e.g. 30%, such as 40%, e.g. 50%, such as 60%, e.g. 70%, such as 80%, e.g. 90%, such as 99% reduced when compared to the PPO activity of products wherein the PPO activity has not been reduced (i.e. substantially untreated products).

PPO activity may be measured using the method in 'Inhibition of apple polyphenoloxidase (PPO) by ascorbic acid, citric acid and sodium chloride' by Pizzocaro, F. et al, Journal of Food Processing and Preservation 17 (1993) 21-30.

In another aspect the invention relates to a method for reducing browning of potatoes, the method comprises the steps of:
(i) providing one or more potatoes;
(ii) rinsing the potatoes;
(iii) disrupting the potatoes; and
(iv) adding at least one chelating agent and at least one inorganic acid.

The disrupted potatoes having reduced browning may be subjected to further processing for isolating products from the disrupted potatoes.

It is preferred that more that 90% of the potatoes used in the present method are industrial potato varieties as such potatoes usually comprises more starch and/or protein than table potato varieties.

Thus, in one embodiment the potatoes comprising a starch content in the range from 13-30% w/w, such as in the range from 15-25% w/w, e.g. in the range from 18-23% w/w.

In another embodiment the potatoes comprises a protein content in the range from of 1-5% w/w, such as in the range from 1.5-4.5% w/w, e.g. in the range from 2-4% w/w, such as in the range from 2.5-3.5% w/w and preferably in the range from 1.8-3% w/w. The protein content is measured as N x 6.25.

In a further embodiment the potatoes comprises a starch content in the range from 13-30% w/w, such as in the range from 15-25% w/w, e.g. in the range from 18-23% w/w and a protein content in the range from of 1-5% w/w, such as in the range from 1.5-4.5% w/w, e.g. in the range from 2-4% w/w, such as in the range from 2.5-3.5% w/w, e.g. in the range from 1.8-3% w/w.

In order to reduce the likelihood of destroying the equipment involved in this method, the potatoes are rinsed prior to disruption in order to remove soil, sand and other impurities from the peel. A rinsing step is inexpensive compared to the costs of repairing, or as a last instance replacing, the equipment involved in this method. The rinsing in step (ii) may be performed using e.g. water or another applicable liquid substance. The rinsing step (ii) may be performed using a mechanical treatment such as but not limited to brushing or a combination of the mechanical treatment and the use of water or another applicable liquid substance.

In order to disrupt the cell walls of the potato, the potato may be subjected to a disruption step. In a embodiment the disruption in step (iii) comprises cutting, chopping, pressing, milling, grinding, shredding and grating and any combinations hereof. Any other method known in the art may also be employed to disrupt the potato. The disruption may be performed directly on the at least one potato however, if needed water may be added during the disruption process.

Thus, in one embodiment water is added at step (ii) or (iii).

In principle any chelating agent is applicable for use as a chelating agent in the present method. It is however, preferred that the chelating agent can be used in feeds for human or animal consumption. Chelating agents are usually expensive compounds containing one or more carboxylic acid groups. In the present context the term chelating agent is to be understood as a chemical compound capable of chelating a metal ion in an enzyme or in a solution. When a metal ion in an enzyme is bound by the chelating agent, thus, removed from the enzyme, the enzyme becomes inactivated.

In one a preferred embodiment the at least one chelating agent is selected from the group consisting of citric acid, citrate, oxalic acid, oxalate, succinic acid, succinate, phosphoric acid, phosphate, lactic acid, lactate, malic acid, malate, maleonic acid, maleonate, tartaric acid and tartrate or any combination thereof.

As stated previously the present inventors surprisingly discovered that the expensive chelating agents may be partly replaced by inexpensive inorganic acids.

Thus, in one embodiment the inorganic acid is a strong or medium strength inorganic acid. The advantage of substituting part of the chelating agent with a strong inorganic acid or medium strength inorganic acid in the present process is that less chelating agent is to be used thus, significantly limiting the cost and to reduce the amount of liquid to be handled in the process.

In an embodiment of the present invention the method is industrial scale production of products from potatoes with reduced activity of PPO.

In another embodiment the inorganic acid is a food grade acid.

In a preferred embodiment of the present invention the inorganic strong acid or inorganic medium strength acid may be selected from the group consisting of hydrochloric acid, sulphuric acids, phosphoric acids and nitric acids.

In a preferred embodiment the addition of the at least one chelating agent and the at least one inorganic acid in step (iv) is performed at step (ii) or (iii).

In a preferred embodiment the pH value of the disrupted potatoes are adjusted by the addition of the at least one chelating agent and the at least one inorganic acid to a pH in the range of 2.5 - 5, such as in the range from 2.8 - 4.5, e.g. in the range from 3.0 - 4. In a preferred embodiment the pH is 3.5.

Following addition of the at least one chelating agent and the at least one inorganic acid to the disrupted potato, the chelating agent provides a permanent inhibition of the PPO activity and the inorganic acid provided a temporarily inhibition of the PPO activity.

In an embodiment of the present invention the product is isolated by loading the disrupted potato directly on an expanded bead chromatography column, whereby at least one product with a reduced PPO activity may be provided.

Thus, in a preferred embodiment the products with a reduced PPO activity are isolated using expanded bead chromatography.

In another embodiment the method further comprises the following steps of:
(vi) separating the disrupted potatoes into a liquid phase and a solid phase before isolating the products with a reduced PPO activity from the liquid phase.

The separation may be performed using any applicable method. The products with a reduced PPO activity may be isolated by filtration, centrifugation or decanting.

The isolation step of the liquid phase and a solid phase may be performed using precipitation, centrifugation, filtration, decanting or chromatography.

In a preferred embodiment the chromatography is expanded bead chromatography or packed bead chromatography. In another embodiment the chromatography is ionexhange chromatography.

The isolated products with a reduced PPO activity may be a protein product or a fibrous product.

In the present context the term fibrous as used in connection with the isolated products is to be understood as polymeric compounds that are resistant to enzymatic digestion in the digestive tract.

In respect of the protein product is may be preferred that the proteins in the protein product are native proteins.

In the present context the term "native protein" is to be understood as a protein in it's national state maintaining it's function and which is soluble in water. Thus, in an embodiment at least 80%, e.g. at least 90% or at least 95%, of the native protein is soluble in water.

In yet a preferred embodiment the native protein is selected from the group consisting of patatin and protease inhibitors

A second aspect of the present invention pertains to a protein product obtainable by the above described method wherein said product comprises at least one chelating agent and at least one inorganic acid.

A third aspect of the present invention pertains to a fibrous product obtainable by the above described method wherein said product comprises at least one chelating agent and at least one inorganic acid.

It should be noted that embodiments and features described in the context of one of the aspects of the present invention also apply to the other aspects of the invention.

### References

Inhibition of apple polyphenoloxidase (PPO) by ascorbic acid, citric acid and sodium chloride' by Pizzocaro, F. et al, Journal of Food Processing and Preservation 17 (1993) 21-30.

## Claims

1. Method for isolating products with a reduced PPO activity from potatoes, the method comprises the steps of:
(i) providing one or more potatoes;
(ii) rinsing the potatoes;
(iii) disrupting the potatoes;
(iv) adding at least one chelating agent and at least one inorganic acid; and
(v) isolating the products with a reduced PPO activity from the disrupted potatoes.

2. A method according to claim 1, wherein the addition in step (iv) is performed at step (ii) or (iii).

3. A method according to any one of claims 1 or 2, wherein water is added at step (ii) or (iii).

4. A method according to any one of claims 1-3, wherein the inorganic acid is a strong inorganic acid or a medium strength inorganic acid.

5. A method according to any one of claims 1-4, wherein the inorganic acid is food grade acid.

6. A method according to any one of claims 1-5, wherein the inorganic strong acid is selected from the group consisting of hydrochloric acid, sulphuric acids, phosphoric acids and nitric acids.

7. A method according to any one of claims 1-6, wherein the chelating agent is selected from the group consisting of citric acid, citrate, oxalic acid, oxalate, succinic acid, succinate, phosphoric acid, phosphate, lactic acid, lactate, malic acid, malate, maleonic acid, maleonate, tartaric acid and tartrate or any combination thereof.

8. A method according to any one of claims 1-7, wherein the disrupted potatoe(s) are adjusted to a pH in the range of 2.5 - 5, such as in the range from 2.8 - 4.5, e.g. in the range from 3.0 - 4, preferably, pH 3.5.

9. A method according to any one of claims 1-8, wherein the potatoes comprises a starch content in the range from 13-30% w/w, such as in the range from 15-25% w/w, e.g. in the range from 18-23% w/w.

10. A method according to any one of claims 1-9, wherein the potatoes comprises a protein content in the range from of 1-5% w/w, such as in the range from 1.5-4.5% w/w, e.g. in the range from 2-4% w/w, such as in the range from 2.5-3.5% w/w, e.g. in the range from 1.8-3% w/w.

11. A method according to any one of claims 1-10, wherein the potatoes comprises a starch content in the range from 13-30% w/w, such as in the range from 15-25% w/w, e.g. in the range from 18-23% w/w and a protein content in the range from of 1-5% w/w, such as in the range from 1.5-4.5% w/w, e.g. in the range from 2-4% w/w, such as in the range from 2.5-3.5% w/w, e.g. in the range from 1.8-3% w/w.

12. A method according to any one of claims 1-11, wherein the isolated in step (v) involves expanded bead chromatography.

13. A method according to any one of claims 1-12, wherein the product with a reduced PPO activity is a protein product or a fibrous product.

14. A protein product obtainable by the method according to claims 1-13, wherein said product comprises at least one chelating agent and at least one inorganic acid.

15. A fibrous product obtainable by the method according to claims 1-13, wherein said product comprises at least one chelating agent and at least one inorganic acid.
